# EUROPEAN PATENT SPECIFICATION

(11) **EP 3 092 429 B1**
(45) Date of publication and mention of the grant of the patent: **02.05.2018**
(21) Application number: 14835508.4
(22) Date of filing: 23.12.2014
(51) Int. Cl.: F16K 15/06, F16K 17/28

(54) **VALVE AND ASSEMBLY**
VENTIL UND ANORDNUNG
CLAPET ET ENSEMBLE

(30) Priority: 10.01.2014 IT BS20140010
(43) Date of publication of application: 16.11.2016
(73) Proprietor: Nikles Tec Italia S.r.l., 25013 Carpenedolo Brescia (IT)
(72) Inventor: NIKLES, Gerhard, I-25013 Carpenedolo (Brescia) (IT); AZZINI, Mauro, I-25013 Carpenedolo (Brescia) (IT); SPERA, Marco, I-25013 Carpenedolo (Brescia) (IT)
(74) Representative: Eterno, Enrico
(86) International application number: PCT/IB2014/067252
(87) International publication number: WO 2015/104616

(56) References cited:
- EP-A1- 0 787 864
- US-A- 4 862 913

## Description

The present invention relates to a check valve for a fluid flow, for example water, and an assembly comprising such a valve. E.g. documents US4862913A and EP0787864A1 disclose check valve systems according to the prior art.

Check valves are currently available on the market comprising an outer casing, wherein an obturator acts reversibly on an intermediate body inserted into said casing through an own first sealing, and the intermediate body is in turn sealingly inserted in the outer casing.

Such a known system therefore requires a separate assembly of a stand-alone check valve (consisting of the obturator and the intermediate body), which must then be joined to the outer casing by means of distinct and additional sealing elements.

However, the known system is not free from drawbacks since - mainly - the outer casing does not perform any specific function, if not a passive role of housing and support of the intermediate body.

The present invention falls within this context, proposing to provide a check valve comprising a smaller number of components compared to conventional valves, and in particular designed to reduce the total number of sealing elements requiered for its operation.

Such an object is achieved by a check valve according to claim 1, and by a valve assembly according to claim 12. The dependent claims describe preferred embodiment variants.

The object of the present invention will now be described in detail, with the aid of the accompanying drawings, in which:

- figures 1, 2, 3 and 4 show two perspective views from opposite sides, a side view and an exploded view, respectively, of an assembly of the present invention, according to one embodiment;

- figures 5 and 6 show sections along plane V-V of the assembly in figure 3, where the left halves of these figures show interception configurations of the check valve, the right halves show a transit configuration thereof, and where such sections are made along angularly offset vertical planes.

With reference to the figures above, reference numeral 40 indicates, as a whole, a check valve for a fluid flow passing through such valve.

This type of valve is therefore designed to allow the transit of the fluid in a predefined flow direction X, but to prevent such a transit in a direction opposite thereto.

While the embodiment shown in the figures shows a valve assembly 10 - which thus combines within itself the functions of a check valve and of a limiting valve 1 - the check valve 40 described herein may be used individually, i.e. separately from a limiting valve.

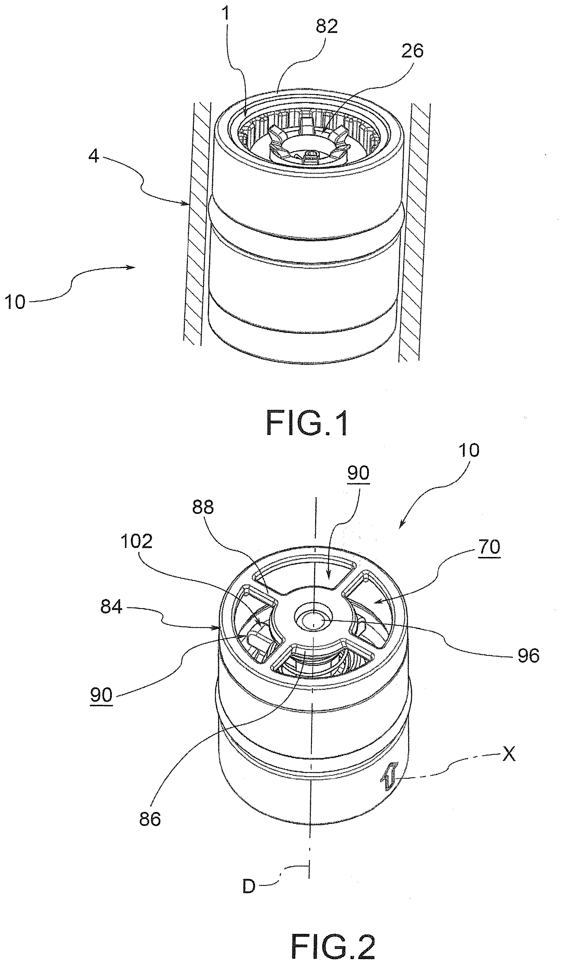

Returning, however, to the construction of the check valve 40 shown, which is preferably a valve for fluids (in particular: water), it comprises a hollow body 38, externally configured to sealingly insert itself in a fluid duct 4 - schematised in figure 1 - and extending around a body axis D so as to delimit internally a body cavity 70 for crossing of said fluid. Such a body 38 comprises an annular abutment bead 44 which, projects radially into the cavity.

In the present description, the terms "upstream", "downstream", "radial" and/or "axial" will be referred to the body axis D, which is preferably oriented along the predefined transit direction X of the fluid, unless otherwise specified.

According to an advantageous embodiment, the hollow body 38 comprises a substantially tubular wall 82, where the annular abutment bead 44 is or comprises a projection which extends from such a wall (or from a relative inner surface 106) within the body cavity 70.

According to an advantageous embodiment, at the annular abutment bead 44, the hollow body 38 delimits externally a sealing seat 52 for the partial housing of one or more sealing means 68, such as an O-ring or a gasket, between said body and the fluid duct 4. According to the variant shown, such a seat is lowered relative to the body surfaces 98, 98' which delimit it in axial direction.

Preferably, the annular abutment bead 44 and the sealing seat 52 are made by means of a single moulding operation, or by means of a single plastic deformation of the substantially tubular wall 82 of said body.

Preferably, moreover, the hollow body 38 and the annular abutment bead 44 are joined to each other without fluidic sealing elements.

Valve 40 further comprises a mobile obturator 42, housed at least partially in the body cavity 70 and subject to being reversibly moved by the transit of the fluid between an interception configuration, wherein the obturator sealingly lies on the annular abutment bead 44, and a transit configuration of the fluid, wherein the mobile obturator is distanced from the bead. More specifically, the mobile obturator 42 sealingly lies on a substantially conical surface 72 of the annular abutment bead 44, which will be described in greater detail below.

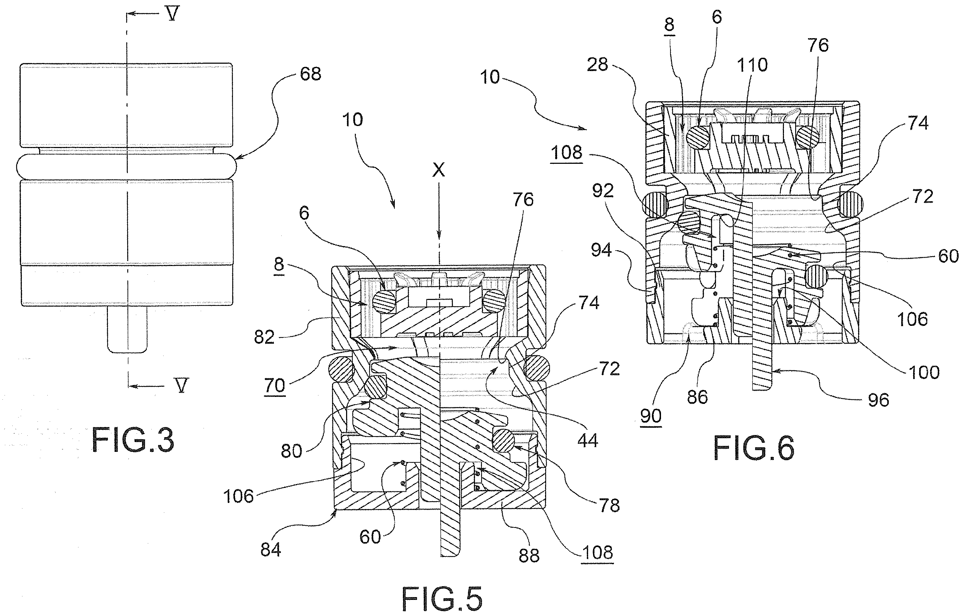

Referring in particular to the section in figure 5, depending on the fluid flowing speed, the mobile obturator 42 can translate between the interception configuration (left), in which said obturator 42 forms a seal with the annular abutment bead 44 - specifically by means of an obturator gasket 78 - and a transit configuration (right) in which said obturator 42 lies at a certain distance from the bead.

Valve 40 comprises elastic means 60 acting between the hollow body 38 and the mobile obturator 42 to continuously move the latter towards the interception configuration, in opposition to the force exercised by the flow of fluid which transits in the predefined direction X through body 38.

Therefore, when the force of the flow speed on the obturator is sufficiently high to overcome the force of the elastic means 60, the mobile obturator will arrange in the transit configuration. Conversely, when the force of the elastic means 60 is stronger than the force of the flow on the obturator (i.e. when the flow velocity drops below a threshold value), the check valve will arrange in the interception configuration, thus preventing the flow in a direction opposite to the predefined direction X.

For example, the elastic means 60 act in extension to achieve the interception configuration, and preferably comprise a helical spring.

According to a particularly advantageous variant, the hollow body 38 and the annular abutment bead 44 are made in one piece, for example in a polymer material. In a possible variant, said material is polyoxymethylene (POM) .

With reference for example to the variant in figure 6, the annular abutment bead 44 may delimit, flanking each other in an axial direction, the substantially conical surface 72 for the abutment with the obturator gasket 78 (when provided), a spacer surface 74, for example generally tubular in shape, and a concave housing surface 76 to house at least a portion of an obturator head 80 bearing said obturator gasket 78.

Suitably, the concave housing surface 76 may also serve as a stop member for the mobile obturator towards the interception configuration, for example in the absence of the obturator gasket 78 or in the case of wear/thinning of the latter.

According to the invention, an axial end of the body cavity 70 is partially delimited by a closure element 84, connected to the body in a releasable manner. For example, the closure element 84 may be screwed or snap-engaged to the hollow body 38.

The elastic means 60, act on an inner annular wall 86 of the closure element 84, from which a plurality of spokes 88 extend, delimiting between them apertures 90 for the transit of the fluid externally to the hollow body 38.

Advantageously, the closure element 84 and the hollow body 38 delimit wall thinnings 92, 94 corresponding to each other, on which axial blocking elements (such as threads or blocking teeth) are made.

In other words, the wall thinnings 92, 94 ensure the element-body axial blocking without increasing the overall size of the check valve, i.e. without narrowing the transit section of the hollow body and/or avoiding external projections or thickenings of the hollow body.

Preferably, first wall thinnings 92 of the closure element 84 are housed radially and axially in second wall thinnings 94 of the hollow body 38. Moreover, according to a preferred variant, the surfaces of such wall thinnings 92, 94 opposite each other bear the axial locking elements.

As said, according to a variant embodiment, the mobile obturator 42 comprises said obturator head 80 which works on the annular abutment bead 44 by means of the obturator gasket 78.

According to a further variant, the mobile obturator 42 may further comprise a guide stem 96 which extends from head 80 - from the bottom side according to the orientation in figure 3 - and which is inserted so as to slide and passing through the inner annular wall 86.

More specifically, the guide stem 96 is slidably housed in a bush portion 100 of the inner annular wall 86, which preferably extends towards the body cavity 70.

In this way, the inner annular wall 86 also acts as a guide for the obturator movements in the two discussed configurations.

The check valve 40 comprises at least one compression limiter 104 of the elastic means 60 in the transit configuration, which, acts on the mobile obturator 42 on a lower surface 110 thereof to prevent excessive compression of such means.

The compression limiter 104 is arranged at the closure element 84, and advantageously may include a free edge of the bush portion 100.

The lower surface 110 of the mobile obturator 42 is arranged on the bottom of a spring seat 108, which houses the elastic means 60 completely when the mobile obturator (42) abuts the at least one compression limiter (104) and which is formed in the mobile obturator 42. Advantageously, said seat 108 is open toward an axial end of the hollow body 38, or towards the closure element 84 (when provided).

According to a further embodiment, the guide stem 96 acts as a spring-guide for elastic means 60 acting on the mobile obturator 42 to move it towards the interception configuration.

For example, for the variant which provides for a helical spring, such a spring may be mounted coaxially to the guide stem 96.

According to an advantageous embodiment, the mobile obturator 42 may comprise one or more guide elements 102 which develop from said obturator towards an inner surface 106 of the hollow body 38, so as to keep the obturator guided (for example parallel to the body axis D) between the discussed configurations.

Advantageously, the guide element 102 is arranged at the root of the guide stem 96.

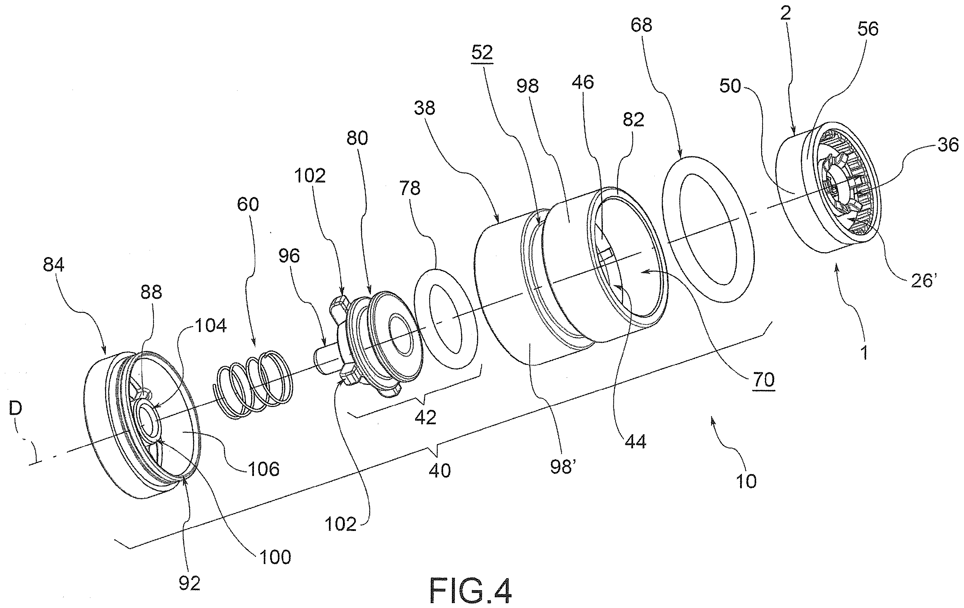

Preferably, there is provided a plurality of such elements 102 angularly offset. For example, the embodiment in figure 4 shows four guide elements 102 spaced approximately by 90°.

The present invention also relates to a valve assembly 10 comprising a check valve 40 according to any of the previous embodiments, and a limiting valve 1 at least partially housed in the hollow body 38.

Preferably, as for example shown schematically by the arrow in figure 5, the limiting valve 1 is arranged upstream of the check valve 40 in relation to the predefined transit direction X of the fluid.

Even more preferably, the annular abutment bead 44 delimits a stop surface 46 for a support body 2 of the limiting valve 1.

Therefore, such a bead carries out the dual function of abutment for both the maximum engagement of the limiting valve 1 in the hollow body 38, and for the mobile obturator 42 when the latter lies in its interception configuration.

The limiting valve 1 comprises the support body 2 which, according to one embodiment, extends in a flow plane transverse (preferably orthogonal) to the transit direction X of the fluid in the duct 4.

According to an advantageous embodiment, at least a portion 56 of the outer surface 50 of the support body 2 may have a slight frusto-conicity which tapers in the transit direction X of the fluid.

According to the embodiments shown, the support body 2 comprises a substantially tubular wall 28, which surrounds a body compartment 30 in which an annular adjustment member 6 of said valve 1 is at least partially housed. Such a member 6 delimits, together with the support body 2, one or more lumina 8 for the crossing of said fluid. For example, lumen 8 extends annularly within the support body.

The width of the said lumen 8 is preferably variable and dependent on the flow velocity passing through the valve assembly 10. In fact, under the action of the fluid, the annular adjustment member 6 is elastically deformable to narrow said lumen 8 so as to regulate the fluid flow downstream of valve 1 (and more precisely, downstream of the annular adjustment member).

In other words, since a first flow velocity corresponds to a deformation of a certain extent of the adjustment member 6, and thus a given lumen for the transit of the fluid, a higher velocity will correspond to a greater deformation or pressing of the member, and a lumen for the transit of the fluid of consequently smaller width.

Preferably, the annular adjustment member 6 is or includes a gasket or an O-ring. Advantageously, such a member is substantially toroidal in shape, with a section for example circular or elliptical/oval.

In order to retain the annular adjustment member 6 in the support body 2, the latter preferably comprises a retaining pin 26 on which member 6 is mounted, for example in a substantially coaxial manner.

Innovatively, the check valve object of the present invention is constructively simple since the mobile obturator valve acts directly on the hollow body, the latter also acting as an abutment for the duct in which the valve is inserted.

Consequently, there is a smaller number of seals compared to the known systems.

Advantageously, the valve object of the present invention is constructively simple, therefore suitable for being produced in a cost-effective manner.

Advantageously, the valve object of the present invention further serves as a housing for a limiting valve.

Advantageously, the valve object of the present invention allows creating an interstice with variable section for the crossing of the fluid flow.

Advantageously, the valve object of the present invention is configured to distribute the forces of the fluid in a homogeneous manner along said member, so as to reduce the impact of mechanical stress to which the latter is periodically subjected.

Advantageously, the assembly object of the present invention is designed to prevent possible leaks of the adjustment member. Furthermore, such a member is also highly localised within the support body.

A man skilled in the art may make several changes or replacements of elements with other functionally equivalent ones to the embodiments of the above valve and assembly in order to meet specific needs.

Also such variants are included within the scope of protection as defined by the following claims.

Moreover, each variant described as belonging to a possible embodiment may be implemented independently of the other variants described.

## Claims

1. Check valve (40) for a fluid comprising:
- a hollow body (38), configured externally to sealingly insert itself in a fluid duct (4) and extending around a body axis (D) so as to delimit internally a body cavity (70) for crossing of said fluid;
said body (38) comprising an annular abutment bead (44) projecting radially into said cavity;
- a mobile obturator (42), housed at least partially in the body cavity (70) and subject to being reversibly moved by the fluid transit between an interception configuration, wherein said obturator sealingly lies on the annular abutment bead (44), and a transit configuration of said fluid, wherein the mobile obturator is distanced from the bead;
wherein the hollow body (38) and the annular abutment bead (44) are joined to each other without fluidic sealing elements;
- elastic means (60) acting between the hollow body (38) and the mobile obturator (42) to continuously move the latter towards the interception configuration, in opposition to the force exercised by the fluid flow transiting in a predefined direction (X) through said body;
wherein an axial end of the body cavity (70) is partially delimited by a closure element (84), connected to said body in a releasable manner, and wherein the elastic means (60) act on an inner annular wall (86) of said element, from which a plurality of spokes (88) extend, delimiting between them apertures (90) for the transit of said fluid;
- at least one compression limiter (104) of the elastic means (60) in the transit configuration, which acts on a lower surface (110) of the mobile obturator (42) to prevent excessive compression of such means, said compression limiter (104) being arranged at the closure element (84);
wherein the lower surface (110) of the mobile obturator (42) is arranged on the bottom of a spring seat (108), which is formed in the mobile obturator (42) said check valve being **characterized in that** the spring seat (108) houses the elastic means (60) completely when the mobile obturator (42) abuts the at least one compression limiter (104) in the transit configuration.

2. Valve according to claim 1, wherein the hollow body (38) and the annular abutment bead (44) are made in one piece, for example in a polymer material.

3. Valve according to claim 2, wherein the hollow body (38) and the annular abutment bead (44) are made in one piece of polyoxymethylene (POM).

4. Valve according to any of the previous claims, wherein the annular abutment bead (44) delimits, flanking each other in an axial direction, a substantially conical surface (72) for the abutment with an obturator gasket (78), a spacer surface (74), for example tubular, and a concave housing surface (76) to house at least a portion of an obturator head (80) bearing said obturator gasket (78) .

5. Valve according to any of the previous claims, wherein, at the annular abutment bead (44), the hollow body (38) delimits externally a sealing seat (52) for the partial housing of one or more sealing means (68) between said body and the duct for fluid (4).

6. Valve according to claim 5, wherein the annular abutment bead (44) and the sealing seat (52) are made by means of a single moulding operation, or by means of a single plastic deformation of a substantially tubular wall (82) of said body.

7. Valve according to any of the previous claims, wherein the compression limiter (104) includes a free edge of a bush portion (100) of the inner annular wall (86) .

8. Valve according to any of the previous claims, wherein the closure element (84) is screwed or snap-engaged to the hollow body (38).

9. Valve according to any of the previous claims, wherein the closure element (84) and the hollow body (38) delimit wall thinnings (92, 94) corresponding to each other, on which axial blocking elements are made between said element and said body, e.g. threads or blocking teeth.

10. Valve according to any of the previous claims, wherein the mobile obturator (42) comprises an obturator head (80) which works on the annular abutment bead (44) by means of an obturator gasket (78), and a guide stem (96) which extends from said head and which is inserted in a slidable and passing manner through the inner annular wall (86).

11. Valve according to the previous claim, wherein the guide stem (96) acts as a spring-guide for the elastic means (60) acting on the mobile obturator (42) to move it towards the interception configuration.

12. Valve assembly (10) comprising:
- a check valve (40) according to any of the previous claims; and
- a limiting valve (1) at least partially housed in the hollow body (38).

13. Assembly according to claim 12, wherein, in relation to a predefined direction of transit (X) of the fluid, the limiting valve (1) is positioned upstream of the check valve (40).

14. Assembly according to claim 12 or 13, wherein the annular abutment bead (44) delimits a stop surface (46) for a support body (2) of the limiting valve (1).

## Patentansprüche

1. Rückschlagventil (40) für ein Fluid, umfassend:
- einen hohlen Körper (38), der außen so ausgebildet ist, dass er sich selbst dichtend in einen Fluidkanal (4) einführt und der sich um eine Körperachse (D) derart erstreckt, dass er innen einen Körperhohlraum (70) zum Durchlassen des Fluids bildet;
wobei der Körper (38) eine ringförmige Anschlagwulst (44) umfasst, die in den Hohlraum radial vorragt;
- ein bewegliches Absperrorgan (42), das wenigstens teilweise in dem Körperhohlraum (70) aufgenommen ist und zur reversiblen Bewegung durch den Fluiddurchtritt zwischen einer Absperrstellung, bei der das Absperrorgan an der ringförmigen Anschlagwulst (44) dichtend anliegt, und einer Durchlassstellung für das Fluid, bei der das bewegliche Absperrorgan von der Wulst beabstandet ist, beaufschlagbar ist;
wobei der hohle Körper (38) und die ringförmige Anschlagwulst (44) ohne fluidische Dichtelemente miteinander verbunden sind;
- elastische Mittel (60), die zwischen dem hohlen Körper (38) und dem beweglichen Absperrorgan (42) wirken, um letzteres entgegen der Kraft, die durch den Fluiddurchtritt, der in einer vorbestimmten Richtung (X) durch den Körper strömt, ausgeübt wird, kontinuierlich zur Absperrstellung zu bewegen;
wobei ein axiales Ende des Körperhohlraums (70) teilweise durch ein Verschlusselement (84) begrenzt ist, das mit dem Körper in einer lösbaren Weise verbunden ist, und wobei die elastischen Mittel (60) auf eine innere ringförmige Wand (86) des Elements wirken, von der sich eine Mehrzahl von Speichen (88) erstreckt, die zwischen sich Öffnungen (90) für die Durchlassstellung des Fluids begrenzen;
- wenigstens einen Kompressionsbegrenzer (104) der elastischen Mittel (60) in der Durchlassstellung, der auf eine untere Fläche (110) des beweglichen Absperrorgans (42) wirkt, um eine übermäßige Kompression solcher Mittel zu verhindern, wobei der Kompressionsbegrenzer (104) an dem Verschlusselement (84) angeordnet ist;
wobei die untere Fläche (110) des beweglichen Absperrorgans (42) an dem Boden eines Federsitzes (108) angeordnet ist, der in dem beweglichen Absperrorgan (42) ausgebildet ist, wobei das Rückschlagventil **dadurch gekennzeichnet ist,**
**dass** der Federsitz (108) die elastischen Mittel (60) vollständig aufnimmt, wenn das bewegliche Absperrorgan (42) gegen den wenigstens einen Kompressionsbegrenzer (104) in der Durchlassstellung anliegt.

2. Ventil gemäß Anspruch 1,
wobei der hohle Körper (38) und die ringförmige Anschlagwulst (44) einstückig hergestellt sind, beispielsweise aus einem Polymerwerkstoff.

3. Ventil gemäß Anspruch 2,
wobei der hohle Körper (38) und die ringförmige Anschlagwulst (44) aus Polyoxymethylen (POM) einstückig hergestellt sind.

4. Ventil nach einem der vorangehenden Ansprüche,
wobei die ringförmige Anschlagwulst (44) in axialer Richtung sich flankierend eine im Wesentlichen konische Fläche (72) für die Anlage gegen eine Absperrorgandichtung (78), eine Abstandsfläche (74), die beispielsweise rohrförmig ist, und eine konkave Gehäusefläche (76) zur Aufnahme wenigstens eines Abschnitts eines Absperrorgankopfes (80), der die Absperrorgandichtung (78) trägt, begrenzt.

5. Ventil nach einem der vorangehenden Ansprüche,
wobei an der ringförmigen Anschlagwulst (44) der hohle Körper (38) außen einen Dichtungssitz (52) für das teilweise Aufnehmen einer oder mehrerer Dichtungsmittel (68) zwischen dem Körper und dem Kanal für das Fluid (4) begrenzt.

6. Ventil gemäß Anspruch 5,
wobei die ringförmige Anschlagwulst (44) und der Dichtungssitz (52) durch einen einzigen Formungsschritt oder durch eine einzige plastische Verformung einer im Wesentlichen rohrförmigen Wand (82) des Körpers hergestellt werden.

7. Ventil nach einem der vorangehenden Ansprüche,
wobei der Kompressionsbegrenzer (104) eine freie Kante eines Hülsenabschnitts (100) der inneren ringförmigen Wand (86) aufweist.

8. Ventil nach einem der vorangehenden Ansprüche,
wobei das Verschlusselement (84) mit dem hohlen Körper (38) verschraubt oder einrastend verbunden ist.

9. Ventil nach einem der vorangehenden Ansprüche,
wobei das Verschlusselement (84) und der hohle Körper (38) Wanddickenminderungen (92, 94) begrenzen, die einander entsprechen und an denen axiale Blockierelemente zwischen dem Element und dem Körper, beispielsweise Gewinde oder Rastzähne, ausgebildet sind.

10. Ventil nach einem der vorangehenden Ansprüche,
wobei das bewegliche Absperrorgan (42) einen Absperrorgankopf (80) aufweist, der auf die ringförmige Anschlagwulst (44) mittels einer Absperrorgandichtung (78) einwirkt, und einen Führungszapfen (96) umfasst, der sich von dem Kopf erstreckt und in einer gleitfähig und in hindurchtretender Weise durch die innere ringförmige Wand (86) eingeführt ist.

11. Ventil nach einem der vorangehenden Ansprüche,
wobei der Führungszapfen (96) als eine Federführung für die elastischen Mittel (60) dient, der auf das bewegliche Absperrorgan (42) einwirkt, um dieses zu der Absperrstellung zu bewegen.

12. Ventilanordnung (10), umfassend:
- ein Rückschlagventil (4) nach einem der vorangehenden Ansprüche; und
- ein Begrenzungsventil (1), das wenigstens teilweise in dem hohlen Körper (38) aufgenommen ist.

13. Anordnung nach Anspruch 12,
wobei in Bezug auf eine vorbestimmte Durchtrittsrichtung (X) des Fluids das Begrenzungsventil (1) vor dem Rückschlagventil (40) angeordnet ist.

14. Anordnung nach Anspruch 12 oder 13,
wobei die ringförmige Anschlagwulst (44) eine Anlauffläche (46) für einen Stützkörper (2) des Begrenzungsventils (1) bildet.

## Revendications

1. Clapet antiretour (40) pour un fluide comprenant :
- un corps creux (38), configuré à l'extérieur pour s'insérer de façon étanche dans un conduit de fluide (4) et s'étendant autour d'un axe de corps (D) de façon à délimiter à l'intérieur une cavité de corps (70) pour la traversée dudit fluide ;
ledit corps (38) comprenant un cordon de butée annulaire (44) faisant saillie radialement dans ladite cavité ;
- un obturateur mobile (42), logé au moins partiellement dans la cavité de corps (70) et susceptible d'être déplacé de façon réversible par le passage de fluide entre une configuration d'interception, dans laquelle ledit obturateur se trouve de façon étanche sur le cordon de butée annulaire (44), et une configuration de passage dudit fluide, dans laquelle l'obturateur mobile est éloigné du cordon ;
dans lequel le corps creux (38) et le cordon de butée annulaire (44) sont assemblés l'un à l'autre sans éléments d'étanchéité fluidique ;
- un moyen élastique (60) agissant entre le corps creux (38) et l'obturateur mobile (42) pour déplacer en continu ce dernier vers la configuration d'interception, en opposition à la force exercée par l'écoulement de fluide passant dans une direction prédéfinie (X) à travers ledit corps ;
dans lequel une extrémité axiale de la cavité de corps (70) est délimitée partiellement par un élément de fermeture (84), raccordé audit corps de manière détachable, et dans lequel le moyen élastique (60) agit sur une paroi annulaire intérieure (86) dudit élément, depuis lequel s'étend une pluralité de rayons (88), délimitant entre eux des ouvertures (90) pour le passage dudit fluide ;
- au moins un limiteur de compression (104) du moyen élastique (60) dans la configuration de passage, qui agit sur une surface inférieure (110) de l'obturateur mobile (42) pour empêcher une compression excessive de ce moyen, ledit limiteur de compression (104) étant agencé au niveau de l'élément de fermeture (84) ;
dans lequel la surface inférieure (110) de l'obturateur mobile (42) est agencée sur le fond d'un siège de ressort (108), qui est formé dans l'obturateur mobile (42), ledit clapet antiretour étant **caractérisé en ce que** le siège de ressort (108) loge totalement le moyen élastique (60) lorsque l'obturateur mobile (42) bute contre l'au moins un limiteur de compression (104) de la configuration de passage.

2. Clapet selon la revendication 1, dans lequel le corps creux (38) et le cordon de butée annulaire (44) sont réalisés d'une seule pièce, par exemple dans un matériau polymère.

3. Clapet selon la revendication 2, dans lequel le corps creux (38) et le cordon de butée annulaire (44) sont réalisés d'une seule pièce en polyoxyméthylène (POM).

4. Clapet selon l'une quelconque des revendications précédentes, dans lequel le cordon de butée annulaire (44) délimite, placés les uns à côté des autres dans une direction axiale, une surface sensiblement conique (72) pour la butée avec un joint d'obturateur (78), une surface d'entretoise (74), par exemple tubulaire, et une surface de logement concave (76) pour loger au moins une portion d'une tête d'obturateur (80) portant ledit joint d'obturateur (78).

5. Clapet selon l'une quelconque des revendications précédentes, dans lequel, au niveau du cordon de butée annulaire (44), le corps creux (38) délimite à l'extérieur un siège d'étanchéité (52) pour le logement partiel d'un ou de plusieurs moyens d'étanchéité (68) entre ledit corps et le conduit pour fluide (4).

6. Clapet selon la revendication 5, dans lequel le cordon de butée annulaire (44) et le siège d'étanchéité (52) sont réalisés au moyen d'une seule opération de moulage, ou au moyen d'une seule déformation plastique d'une paroi sensiblement tubulaire (82) dudit corps.

7. Clapet selon l'une quelconque des revendications précédentes, dans lequel le limiteur de compression (104) comporte un bord libre d'une portion de douille (100) de la paroi annulaire intérieure (86).

8. Clapet selon l'une quelconque des revendications précédentes, dans lequel l'élément de fermeture (84) est vissé ou encliqueté sur le corps creux (38).

9. Clapet selon l'une quelconque des revendications précédentes, dans lequel l'élément de fermeture (84) et le corps creux (38) délimitent des amincissements de paroi (92, 94) correspondants l'un à l'autre, sur lesquels des éléments de blocage axial sont réalisés entre ledit élément et ledit corps, par exemple des filetages ou des dents de blocage.

10. Clapet selon l'une quelconque des revendications précédentes, dans lequel l'obturateur mobile (42) comprend une tête d'obturateur (80) qui fonctionne sur le cordon de butée annulaire (44) au moyen d'un joint d'obturateur (78), et une tige de guidage (96) qui s'étend depuis ladite tête et qui est insérée de manière coulissante et passante à travers la paroi annulaire intérieure (86).

11. Clapet selon la revendication précédente, dans lequel la tige de guidage (96) sert de guide-ressort pour le moyen élastique (60) agissant sur l'obturateur mobile (42) pour le déplacer vers la configuration d'interception.

12. Ensemble de clapets (10) comprenant :
- un clapet antiretour (40) selon l'une quelconque des revendications précédentes ; et
- un clapet limiteur (1) logé au moins partiellement dans le corps creux (38).

13. Ensemble selon la revendication 12, dans lequel, par rapport à une direction de passage prédéfinie (X) du fluide, le clapet limiteur (1) est positionné en amont du clapet antiretour (40).

14. Ensemble selon la revendication 12 ou 13, dans lequel le cordon de butée annulaire (44) délimite une surface d'arrêt (46) pour un corps de support (2) du clapet limiteur (1).
